# EUROPEAN PATENT APPLICATION

(11) **EP 4 383 309 A1**
(43) Date of publication of application: **12.06.2024**
(21) Application number: 22852700.8
(22) Date of filing: 23.06.2022
(51) Int. Cl.: H01J 49/00, H01J 49/06, H01J 49/42

(54) **MASS SPECTROMETER**

(30) Priority: 06.08.2021 JP 2021129597
(71) Applicant: HITACHI HIGH-TECH CORPORATION, Tokyo 105-6409 (JP)
(72) Inventor: ISHIGURO Kouji, Tokyo 105-6409 (JP); MINATA Shinsuke, Tokyo 105-6409 (JP); YASUDA Hiroyuki, Tokyo 105-6409 (JP); TOMA Tsugunao, Tokyo 105-6409 (JP); SUGAWARA Yuka, Tokyo 105-6409 (JP)
(74) Representative: Strehl Schübel-Hopf & Partner
(86) International application number: PCT/JP2022/025028
(87) International publication number: WO 2023/013274

(57) **Abstract**

To provide a mass spectrometer in which a mass axis deviation can be prevented by having a relatively inexpensive configuration. The mass spectrometer includes: a mass filter including rod electrodes 37, a holder 38 for holding the rod electrodes, a holder support base 39 on which the holder is placed, and a leaf spring 43 configured to press the holder with an elastic force to fix the holder to the holder support base; a temperature sensor (48, 53); and a control unit 58 configured to control, based on a measurement signal of the temperature sensor, a voltage value of a high frequency voltage applied to the rod electrodes, in which the temperature sensor is fixed to the leaf spring.

## Description

### [Technical Field]

The present invention relates to a mass spectrometer.

### [Background Art]

A sample solution is made to flow into a capillary to which a high voltage is applied, a sample is ejected from a distal end of the capillary, and a heated gas is blown off to the sample from the surrounding thus forming charged liquid droplets. The charged liquid droplets are subjected to evaporation and splitting thus generating ions. These ions are drawn into a low vacuum generated by a vacuum pump using an electric field or the like. These ions are made to pass through an ion lens having various roles, and thereafter, the ions are introduced into a quadrupole mass filter (hereinafter referred to as a mass filter). The mass filter is constituted of four rod electrodes (hereinafter referred to as Q rods), and a ceramic holder (hereinafter abbreviated as a holder) that fixes these Q rods. Four Q rods are fixed to the holder such that the centers of circles of the Q rods in cross section are respectively positioned at vertexes of a square respectively. The Q rods that opposedly face each other are connected to each other by a wire, U + Vcoswt is applied to the combination of the first Q rods, and -U- Vcoswt is applied to the combination of the second Q rods. In the above-mentioned configuration, U indicates a direct current voltage, and Vcosωt indicates a high frequency voltage. In the description made hereinafter, a voltage obtained by superposing Vcoswt (-Vcosωt) to U (-U) is also referred to as a high frequency voltage. When a high frequency volage is applied to the Q rod, charged ions vibrate in a space surrounded by the Q rods of the mass filter. Corresponding to a voltage and a frequency applied to the Q rods, certain ions perform stable vibrations and pass through the mass filter. On the other hand, ions other than the ions described above increase vibrations during passing the mass filter and generate impingement on the Q rods or the like so that the ions cannot pass the mass filter. Accordingly, the mass filter allows splitting of only certain ions.

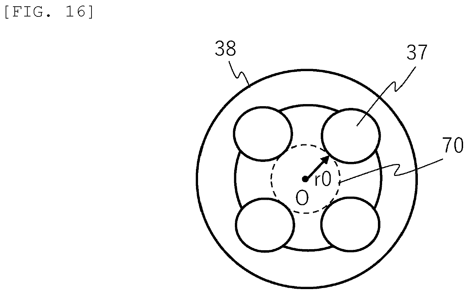

In a holder of the mass filter, an induction loss is generated due to high frequency and hence, heat is generated in the holder. Due to such generation of heat, the Q rods and the holder are thermally elongated so that a distance 2rO between the Q rods that opposedly face each other changes. As illustrated in Fig. 16, the distance between the Q rods that opposedly face each other is defined by a radius r0 of an inscribed circle 70 of the Q rods. It has been well-known that, due to a change in the distance between the Q rods that opposedly face each other, deviation occurs in ions that pass through the mass filter, that is, deviation in the mass number of detected ions. Assuming a deviation amount of the radius r0 of the inscribed circle 70 of the Q rods as Δr, the deviation Δm of the detected mass number m is expressed as Δm/m = -2 (Δr/r0) from a principle formula.

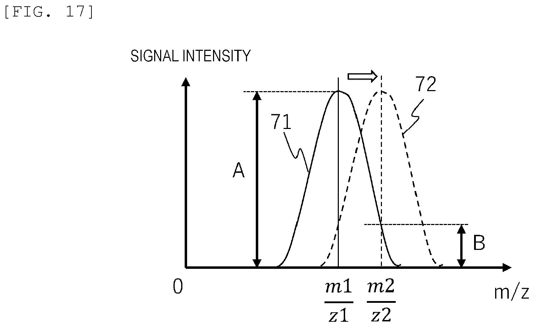

The heat generated in the holder flows into the Q rods that are in contact with the holder. The Q rods are heated and extend in the diametral direction of the Q rod. Accordingly, the inscribed circle radius r0 is changed. Further, the heat that flows into the Q rods further flows into a control circuit board for applying a high voltage to the Q rods via a metal plate that connects the control circuit board and the Q rods to each other. That is, the Q rods have the temperature distribution also in the axial direction. As a result, the inscribed circle radius r0 in the mass filter is not uniform, and changes in a complicated manner along the axial direction of the Q rods. Particularly, in performing the high mass ion detection, it is necessary to increase a DC voltage U and a high frequency voltage Vcoswt. Accordingly, a heating value of the holder is increased, and a deviation amount of detected mass number m is increased. Fig. 17 illustrates mass spectrum curves 71, 72 that are detected at holder temperature T, (T+ΔT). Amass-to-charge ratio (m/z), that is, a value obtained by dividing a mass of ions by the charge number of ions (valence) is taken on an axis of abscissas. As illustrated in Fig. 17, a peak of the mass spectrum curve changes from m1/z1 to m2/z2 due to the increase in temperature ΔT. Such a change in the peak of the mass spectrum curve is referred to as the deviation of mass axis. Assuming that the mass-to-charge ratio of ions to be obtained is m1/z1, a signal intensity is lowered from A to B due to the mass axis deviation. The larger a mass axis deviation amount, the more conspicuous the lowering of sensitivity becomes. That is, in a case where ions of high mass number are detected, the lowering of sensitivity becomes more conspicuous.

In a mass spectrometer disclosed in patent literature 1, to reduce a heat value of a holder that generates a mass axis deviation, escaping of heat from the holder (thermal radiation dissipation) is increased. More specifically, black nickel plating treatment having high emissivity is applied to an inner surface of a vacuum chamber that opposedly faces a holder so as to increase escaping of heat.

In a mass spectrometer disclosed in patent literature 2, to reduce a heat value of a holder in the same manner as the patent literature 1, escaping of heat to a holder holding base on which a holder is mounted (heat dissipation by heat conduction) is increased. To be more specific, to fix the holder to the holder holding base, a fixing band made of phosphor bronze that has large thermal conductivity and has spring property is used.

In a mass spectrometer disclosed in patent literature 3, an approximate expression that predicts a change in temperature of a holder from electricity per unit time supplied to a mass filter, and a relationship between the change in temperature of the holder and a correction amount of a high frequency voltage for correcting a mass axis distortion amount are obtained in advance. In an analysis work, the change in temperature of the holder is predicted from a value of electricity supplied to the holder using such information, and a value of a voltage applied to the mass filter is controlled so as to correct the mass axis deviation.

In a mass spectrometer disclosed in patent literature 4, a strain sensor is mounted on a holder, and a relationship between an amount of strain and an amount of mass axis deviation is obtained in advance. In an analysis work, the amount of mass axis deviation is predicted from the measured amount of strain, and a value of a voltage applied to a mass filter is controlled so as to correct the amount of mass axis deviation.

In a mass spectrometer disclosed in patent literature 5, a method is disclosed where a hole is formed in a portion of a holder, a temperature sensor is disposed in the hole portion, and the temperature measurement of the holder is performed.

### [Citation List]

### [Patent Literature]

Patent Literature 1: International Publication No. 2019/155542
Patent Literature 2: International Publication No. 2019/155543
Patent Literature 3: Japanese Unexamined Patent Application Publication No. Hei10(1998)-112282
Patent Literature 4: Japanese Unexamined Patent Application Publication No. Hei10(1998)-106484
Patent Literature 5: Japanese Unexamined Patent Application Publication No. Hei5(1993)-217548

### [Summary of Invention]

### [Technical Problem]

In the mass spectrometry work using a mass spectrometer, heat is generated in a holder due to a dielectric loss of high frequency so that the deviation of a mass axis is generated. This mass axis deviation lowers the signal intensity of ions to be detected resulting in the deterioration of performance such as lowering of sensitivity.

Patent literatures 1, 2 disclose an approach where the radiation of heat from the holder is positively performed thus suppressing an effect caused by the generated heat. However, in the configuration of patent literature 1, in a case where a temperature increase value due to the generation of heat in the holder is substantially several C°, an effect of suppressing the temperature increase of the holder brought about by the dissipation of radiation heat is low. Accordingly, there is a concern that the temperature increase of the holder cannot be sufficiently suppressed. Further, in the configuration disclosed in patent literature 2, when a heat value generated by a dielectric loss of the holder is increased, escaping of heat is insufficient so that there is a concern that the mass axis deviation cannot be sufficiently reduced.

On the other hand, patent literatures 3, 4 discloses an approach where the mass axis deviation caused by generated heat is cancelled by correcting a high frequency voltage applied to the mass filter corresponding to the mass axis deviation. However, in patent literature 3, a change in temperature of the holder is estimated from electricity supplied to the mass filter. Accordingly, there is a concern that a sufficient effect cannot be obtained due to an error in estimation. On the other hand, in patent literature 4, although a change in the holder is directly detected by the strain sensor, in a vacuum, an outgas into the vacuum from the strain sensor is generated. Accordingly, there is a concern that the quality of the vacuum is deteriorated. Further, it is considerably difficult to make the strain sensor adhere to the holder for a long time in a stable manner without causing peeling off of the strain sensor. The method disclosed in patent literature 5 is characterized by directly measuring a temperature of the holder. However, it is necessary to use an adhesive agent to secure a contact between a contact-type temperature sensor and the holder. Accordingly, in the same manner as patent literature 4, it is considerably difficult to prevent the deterioration of quality of a vacuum by suppressing a generation amount of an outgas to an allowable value or less, and it is also difficult to keep a favorable adhesive state for long years.

Further, the position of the peak of a mass spectrum curve that is used as the reference in the analysis work is the position obtained by performing the analysis work using a standard specimen whose mass is already-known. Accordingly, the mass axis deviation is attributed to the deviation from an analysis condition of a standard specimen. A change in temperature of the holder is not limited to such a change brought about by a dielectric loss generated by high frequency in the analysis work, and includes a change in temperature brought about by a temperature of an environment where the mass spectrometer is installed, a thermal load due to a device standby operation until electricity is supplied to the device and an analysis work is started. These also become factors that cause the mass axis deviation and lowering of the sensitivity of the device.

The present invention has been made in view of such drawbacks, and it is an object of the present invention to suppress the mass axis deviation of a mass spectrometer by measuring a temperature of a holder for a mask filter with high accuracy using the relatively inexpensive configuration.

### [Solution to Problem]

According to an aspect of the present invention, there is provided a mass spectrometer that includes: a mass filter including a rod electrode, a holder that holds the rod electrode, a holder support base on which a holder is placed, and a leaf spring that fixes the holder by pushing to the holder support base by an elastic force of the leaf spring; a temperature sensor; and a control unit that controls a voltage value of a high frequency voltage applied to the rod electrode based on a measurement signal of the temperature sensor, in which the temperature sensor is fixed to the leaf spring.

### [Advantageous Effects of Invention]

It is possible to provide a mass spectrometer capable of suppressing a mass axis deviation with a relatively inexpensive configuration. The objects, the configurations and advantageous effects other than the above will become apparent from the embodiments described hereinafter.

### [Brief Description of Drawings]

[FIG. 1] FIG. 1 is a diagram showing an overall configuration of a mass spectrometer.
[FIG. 2] FIG. 2 is a view of a mass filter (a part thereof) as viewed obliquely from above.
[FIG. 3] FIG. 3 is a view of the mass filter as viewed from an axial direction of a rod electrode.
[FIG. 4] FIG. 4 is a diagram showing a mass filter (a part thereof) of a comparative example.
[FIG. 5] FIG. 5 is an external view of a resistance temperature detector.
[FIG. 6A] FIG. 6A is an external view of a leaf spring.
[FIG. 6B] FIG. 6B is an external view of the leaf spring.
[FIG. 7] FIG. 7 is an external view of a mass filter (a part thereof).
[FIG. 8] FIG. 8 is an external view of the mass filter (a part thereof).
[FIG. 9] FIG. 9 is an external view of the mass filter.
[FIG. 10] FIG. 10 is a conceptual diagram showing a temperature change of a holder and the rod electrodes and a temporal change of a mass axis deviation amount.
[FIG. 11] FIG. 11 is a diagram showing a relation between a thermostatic bath set temperature and the mass axis deviation amount.
[FIG. 12] FIG. 12 is a diagram showing a heat flow caused by holder heating during a sample analysis work.
[FIG. 13] FIG. 13 is a diagram showing the heat flow caused by holder heating performed by a simulated heater.
[FIG. 14] FIG. 14 is a diagram showing a relation between a temperature rise value of the holder caused by the simulated heater and the mass axis deviation amount.
[FIG. 15A] FIG. 15A is a top view of a quadrupole filter unit.
[FIG. 15B] FIG. 15B is a front view of the quadrupole filter unit.
[FIG. 16] FIG. 16 is a diagram illustrating a distance between Q rods.
[FIG. 17] FIG. 17 is a diagram illustrating a problem to be solved by the invention.

### [Description of Embodiments]

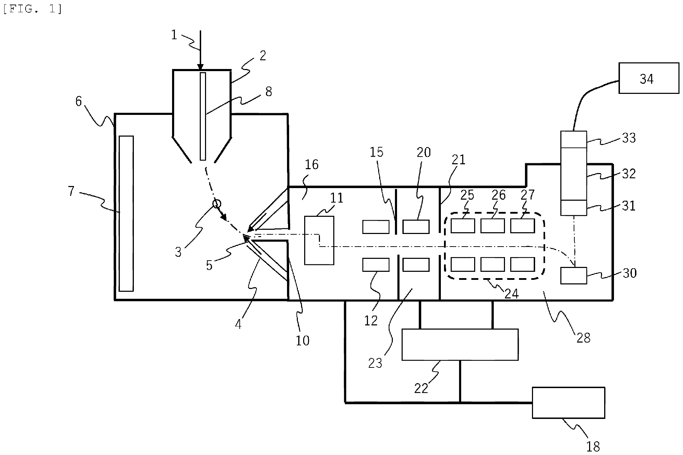

Fig. 1 is a view illustrating an overall configuration of a mass spectrometer. A pressure is applied to a sample solution 1 by a syringe pump so that the sample solution 1 is supplied to a capillary 8 in an ion source 2 to which a high voltage is applied. The capillary 8 is an extremely narrow tube where an inner diameter of a distal end of the tube is several tens micrometer to several hundred micrometers.

The sample solution 1 is ejected from the distal end of the capillary 8. A positive or negative voltage of several kilovolts is applied to the capillary 8. A nebulizer tube is coaxially disposed on an outer periphery of the capillary 8. A nitrogen gas is ejected from the nebulizer tube. Further, an auxiliary heating gas tube is coaxially disposed on an outer periphery of the nebulizer tube. The auxiliary heating gas tube is heated by a heater for heating so that a nitrogen gas or the like that is heated to several hundred degrees is ejected. With such a configuration, atomizing and micronizing of liquid droplets are accelerated. When the increase of surface electric fields of the micronized liquid droplets progresses and a repulsive force between electric charges exceeds a surface tension of the liquid, the liquid droplets are split. Next, ion evaporation occurs so that ions 3 are generated. Such an ionization method is called as an electrospray-ionization: ESI method). As an ionization method, besides such an electrospray-ionization, an atmospheric pressure chemical-ionization (APCI), a chemical-ionization (CI), an electron-impact (EI) and the like can be named. As the ion source, an ECR (microwave), a plasma ion source, an inductive coupling plasma ion source, a penning ion source, a laser ion source and the like are named.

The ion 3 is surrounded by an electric field of a counter plate 4 in which a hole having a triangular pyramidal shape and having a diameter of several mm is formed. Besides ions, neutral particles and a sample in a liquid state without being vaporized are also taken into a downstream side from the counter plate 4 by the flow generated due to a vacuum difference. A counter gas 5 reversely flows toward the ion source 2. Accordingly, the neutral particles and the sample solution 1 in a liquid state that is not vaporized other than ions that form device contamination substances are prevented from intruding into the inside of the device.

The ion source 2 is fixed to an ion source container 6. The ion source container 6 is made of metal such as aluminum or stainless steel. To monitor a state of the inside of the ion source container 6 and the like, a monitoring window 7 made of a transparent glass, resin or the like is provided to the ion source container 6.

An axis shift portion 11 is disposed downstream of a first pore 10. A sample solution component in a liquid state or the like advances in a straight forward manner, and impinges on an inner wall of the axis shift portion 11 so that the sample solution component is removed. On the other hand, ions and components each having a light mass flow toward a downstream side along the flow that has a shifted axis.

An octupole to quadrupole ion guide 12 that converges ions is disposed on the axis shifted downstream side. In the ion guide 12, positive and negative reverse high frequency potentials are applied to Q rods (round bars made of metals or ceramics) disposed adjacently so that ions are taken into a space surrounded by Q rods. An axis of octupole portion and an axis of quadrupole portion are displaced in a direction orthogonal to an ion advancing axis only by several millimeters. Accordingly, neutral particles and the like are removed and only desired ion components are moved toward a downstream side by an electric field applied in an ion advancing axis direction.

On a downstream side of the ion guide 12, a flat-plate-shaped second pore 15 having a hole of a diameter of several millimeters and a plate thickness of several millimeters is disposed. By disposing the plate having the pore thus forming chambers having different degrees of vacuum, undesired ions cannot pass through the pore portion, and only necessary components are taken out. The first pore 10, the axis shift portion 11, the ion guide 12 and the second pore 15 are disposed in a first differential evacuation chamber 16. Vacuum pumping is applied to the first differential evacuation chamber 16 by a dry pump 18 and hence, the degree of vacuum of approximately several hundred Pascals is held.

On a downstream side of the second pore 15, a quadrupole filter referred to as an ion thermalizer (collision attenuator) 20 is disposed. In the same manner as the ion guide 12, the positive and negative reverse high frequency potentials are applied to the Q rods disposed adjacently to each other so that the ions 3 are captured in a space surrounded by the Q rods. Kinetic energy of ions is lowered due to the collision between the ions 3 and the residual gas and hence, ions are converged in the vicinity of the ion advancing axis. Ions 3 move toward a downstream side by an electric field in an optical axis direction not illustrated in the drawing. On the downstream side of the ion thermalizer 20, a flat-plate-shaped third pore 21 having a hole of a diameter of several millimeters and a plate thickness of several millimeters is disposed. The second pore 15, the ion thermalizer 20 and the third pore 21 are disposed in a second differential evacuation chamber 23. The second differential evacuation chamber 23 is connected to a first discharge port of a turbo molecular pump 22, and the degree of vacuum in the second differential evacuation chamber 23 is held at several Pascals.

On the downstream side of the third pore 21, a tripartite mass filter 24 is disposed. Vacuum pumping is applied to a main chamber (analysis chamber) 28 by a second discharge port of the turbo molecular pump 22, so that the degree of vacuum in the main chamber 28 is held at 10⁻³ Pascals or below. A downstream side of the turbo molecular pump 22 is connected to the dry pump 18 so that the discharge is performed. The tripartite mass filter 24 is constituted of a first mass filter 25, a collision chamber 26 and a second mass filter 27 arranged in order from an upper stream side. The first mass filter 25 allows only a precursor ion of a specific mass-charge ratio (m/z) to pass the first mass filter 25 by controlling applied high frequency voltage. The precursor ions are introduced into the collision chamber 26 that is positioned downstream of the first mass filter 25 and in which a collision gas (helium, a nitrogen gas or the like) is introduced. Ions collide with the gas, and portions having weak chemical coupling are split. This phenomenon is referred to as a collision-induced dissociation (CID). The split ions are referred to as product ions. Product ions are introduced into the second mass filter 27 disposed downstream of the collision chamber 26, and the mass separation is performed so that a quantitative analysis of high sensitivity can be performed.

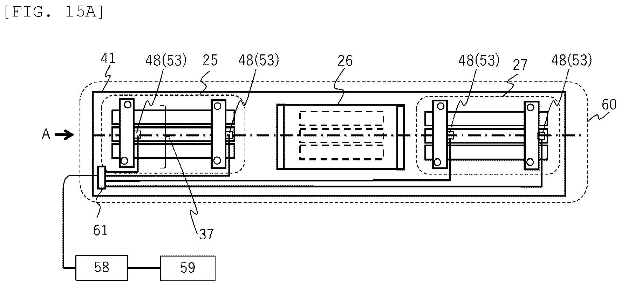

Fig. 15A is a top plan view of a quadrupole filter unit 60 having the tripartite mass filter 24. The quadrupole filter unit 60 is constituted of: a base plate 41; the tripartite mass filter 24 that is constituted of the mass filters 25, 27, and the collision chamber 26 that are disposed on the base plate 41; temperature sensors (a temperature sensor resistor 48, a thermocouple 53 and the like) that measure a temperature of the holder of the mass filter; a connector 61 that merges and connects wirings of the temperature sensors; a sheet metal (not illustrated in the drawing) to which the connector 61 is fixed; a plurality of wheels (not illustrated in the drawings) and the like. The connector 61 is connected to a control board (control unit) 58. The control board 58 corrects voltages (U, V) that a power supply 59 applies to the Q rods 37 based on a measurement signal from the temperature sensor, applies the corrected high frequency voltages to the Q rods 37, and performs an analysis work. Wheels are mounted for facilitating the insertion of the quadrupole filter unit 60 into the main chamber 28.

There may be a case where a failure occurs in the temperature sensor during the analysis work. In a case where only one temperature sensor is disposed on the quadrupole filter unit 60, there is a possibility that the analysis work is interrupted due to the occurrence of a failure in the temperature sensor. To obviate such a drawback, a plurality of temperature sensors are disposed. If a failure occurs in the temperature sensor that is measuring a temperature of the holder, the control board 58 rapidly changes over the temperature sensor to be used for a control to another normal temperature sensor. For example, in the case of a resistance temperature detector, a failure in the temperature sensor can be detected based on an abnormal value of a resistance value (the temperature becoming the abnormal value as a resistance value becomes infinite). Accordingly, a temperature of the holder can be constantly normally detected by the temperature sensor and hence, the deviation of mass can be corrected. Further, a maintenance cycle can be prolonged and hence, it is possible to provide a maintenance-free device having high availability factor.

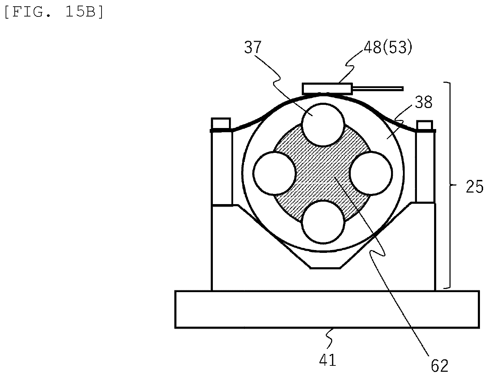

Fig. 15B is a front view of the mass spectrometer as viewed from the direction A illustrated in Fig. 15A. In the drawing, the first mass filter 25 is illustrated. Ions progress in the axial direction of the Q rods 37 (the direction perpendicular to a surface of a paper on which Fig. 15B is drawn), and through a space 62 surrounded by four Q rods 37, only ions having a predetermined mass-charge ratio determined based on a high frequency voltage applied to the Q rods 37 can pass.

The description will be made by returning to the configuration illustrated in Fig. 1. Ions that pass the second mass filter 27 are incident on a conversion dynode 30 due to an electric field. Secondary electrons generated by ion collision are incident on a scintillator 31 by being attracted by an electric field. The generated photoelectrons are amplified by an electron multiplier 32, and is converted into a digital signal by an analog-to-digital converter 33. A mass spectrum of this digital value is displayed on a monitor 34. The mass spectrum is compared with known data sampled in advance so as to specify components of the sample.

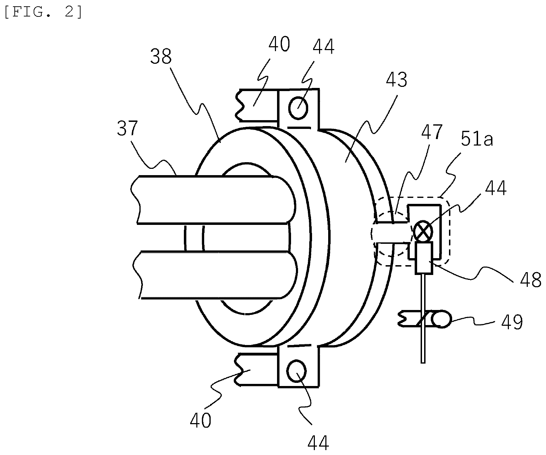

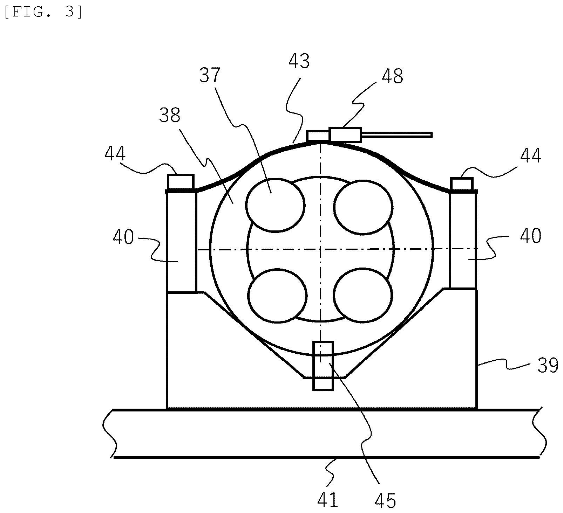

Fig. 2 is a view of the first mass filter 25 (portion) or the second mass filter 27 (portion) as viewed from an oblique upper position. Further, Fig. 3 is a view of the first mass filter 25 or the second mass filter 27 as viewed from an axial direction of the Q rods. The Q rod 37 has a size where a diameter is approximately 10 mm and a length is approximately 180 mm, and is made of pure molybdenum. Four Q rods 37 are fixed to the holder 38 by fixing screws not illustrated in the drawing with a predetermined torque value. A holder support rod 40 is fixed to the holder support base 39. The holder support base 39 is fixed to the base plate 41. A partially assembled part formed of the Q rods 37 and the holder 38 is fixed between a leaf spring 43 that is fixed to the holder support rod 40 by a screw 44 and the holder support base 39. As the leaf spring 43, it is desirable to use a leaf spring made of beryllium copper or titanium nitride that has high thermal conductivity and has a relatively high spring property for pressing the holder 38 to the holder support base 39 using its elastic force. A positioning pin 45 is press-fitted into the holder support base 39. For preventing the movement of the holder 38 in the Q rod axis direction, the positioning pin 45 is inserted into a hole portion formed in the holder 38.

To mount a resistance temperature detector 48 for measuring a temperature of the holder 38 on the leaf spring 43, an overhanging portion 51a extended in the axial direction of the Q rods 37 is formed on the leaf spring 43. As illustrated in Fig. 2, a constricted portion 47 that has a narrow width than the overhanging portion 51a is formed on a proximal end of the overhanging portion 51a. The resistance temperature detector 48 is fixed to the overhanging portion 51a by the screw 44. With the formation of the constricted portion 47, compared to a case where the constricted portion 47 is not formed, an adhesiveness between a region to which the resistance temperature detector of the leaf spring 43 is connected and the holder 38 can be enhanced.

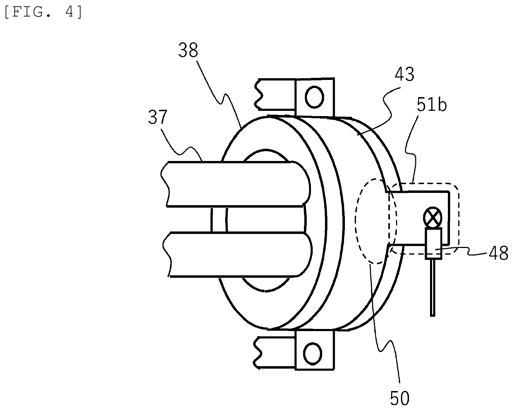

As a comparison example, Fig. 4 illustrates an external appearance of a mass filter (a portion) on which an overhanging portion 51b that does not have the constricted portion 47 is formed on the leaf spring 43. To fix the resistance temperature detector 48 by a screw, it is necessary for the overhanging portion 51 to have a certain amount of width. On the other hand, a main body portion of the leaf spring 43 is bent along an outer periphery of the holder 38. To more accurately measure the holder temperature by the resistance temperature detector 48 mounted on the overhanging portion, it is desirable that the overhanging portion be formed on the main body portion that is in contact with the holder. In view of the above, at a portion where the overhanging portion is connected to the main body portion in a state where the leaf spring 43 is mounted on the mass filter, the main body portion is bent. In a case where the overhanging portion 51b that does not have the constricted portion 47 is formed on the leaf spring 43, bending of the main body portion is interrupted by the overhanging portion 51b and hence, an adhesion degraded region 50 is formed between the main body portion of the leaf spring 43 and the holder 38. When a contact ratio between the holder 38 and the leaf spring 43 is lowered, heat of the holder 38 is not sufficiently transferred to the leaf spring 43 and hence, the temperature of the holder 38 cannot be accurately measured by the resistance temperature detector 48. As a result, the accuracy of the mass axis deviation correction described later is lowered. On the other hand, according to the configuration illustrated in Fig. 2, the constricted portion 47 is formed on the proximal end of the overhanging portion 51a. As a result, an obstruction against bending of the main body portion can be minimized and hence, lowering of the contact ratio can be minimized. Further, in the configuration illustrated in Fig. 2, to prevent the occurrence of a case where a wiring of the resistance temperature detector 48 is freely moved so that a force of such movement is applied to the leaf spring 43 thus lowering the contact ratio between the holder 38 and the leaf spring 43, the wiring of the resistance temperature detector 48 is fixed by a wiring fixing rod 49.

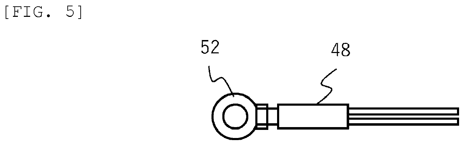

Fig. 5 illustrates an external appearance of the resistance temperature detector 48. The resistance temperature detector 48 is a temperature sensor that makes use of a characteristic of metal that an electric resistance of metal changes substantially proportional to a temperature. The resistance temperature detector 48 is formed by merging a platinum resistance temperature detector to a crimp terminal 52. As the resistance temperature detector 48, there exist a two line type resistance temperature detector and a three line type resistance temperature detector. From a viewpoint of realizing the more accurate temperature measurement of the holder 38, it is preferable to use a three line type resistance temperature detector.

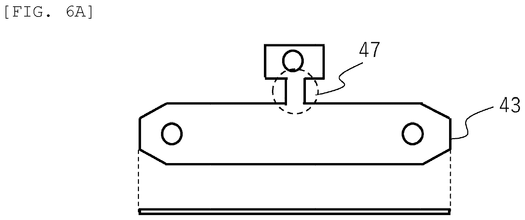

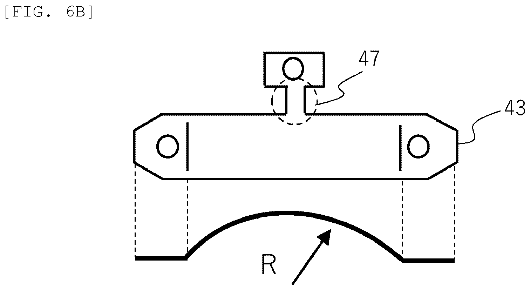

Fig. 6A and Fig. 6B illustrate an external appearance of the leaf spring 43. The leaf spring 43 is used for fixing the holder 38 to the holder support base 39 by pressing. The shape of the main body portion of the leaf spring 43 may be a flat plate shape (Fig. 6A) or a shape having a curvature R larger than a radius of an external profile of the holder 38 (Fig. 6B). Further, the leaf spring 43 may be formed such that the leaf spring 43 has a bent portion. In the example illustrated in Fig. 6B, bent portions are formed between a center curved surface portion of the main body portion and flat surface portions at both ends of the main body portion. However, bent portions may be also formed on the flat-plate-type leaf spring illustrated in Fig. 6A at the substantially same positions as the positions illustrated in Fig. 6B. As described above, the holder 38 and the Q rods 37 are elongated in the axial direction due to the increase of temperature. The leaf spring 43 is configured such that the end portions of the leaf spring 43 are fixed to the holder support rods 40 by the screws. Accordingly, in a case where the leaf spring 43 has no bent portions, an upward force is continuously applied to the screws 44 that fix the leaf spring 43. In a case where the screws 44 are excessively fastened to prevent fixing of the leaf spring 43 by the screws 44 from being loosened, a strain is generated in the holder 38 and the strain becomes a cause of mass axis deviation. By forming the bending portions on the leaf spring 43, the holder 38 is fixed with an appropriate elastic force of the leaf spring 43 so as to suppress the movement of the Q rods 37 in the axial direction.

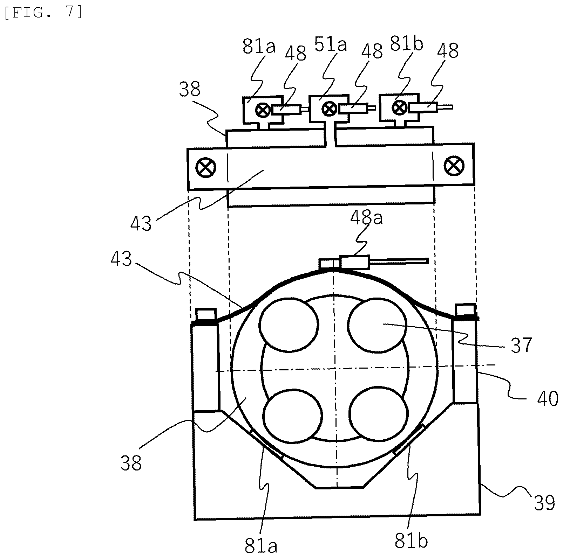

Fig. 7 is a view illustrating an external appearance of a mass filter (a portion of the mass filter) in a case where the number of portions for mounting the resistance temperature detectors 48 are increased to three. By increasing the number of points where the temperature of the holder 38 is measured from one to three, the temperature of the holder 38 can be more accurately measured. In this embodiment, plate-shaped members 81 for mounting the resistance temperature detectors 48 are sandwiched between the holder 38 and the holder support base 39. It is desirable that the plate-shaped member 81 be made of the same material as the leaf spring 43, and an overhanging portion of the plate-shaped member 81 have a constricted portion where a width is narrowed in the same manner as the overhanging portion 51a of the leaf spring 43. With such a configuration, rattling of the holder 38 that may be caused by sandwiching the plate-shaped members 81 can be prevented and hence, the temperature of the holder 38 can be accurately measured. An average of the temperatures measured at three places is set as the holder temperature. By measuring the temperature of the holder 38 with high accuracy, it is possible to reduce a mass shaft deviation amount with high accuracy.

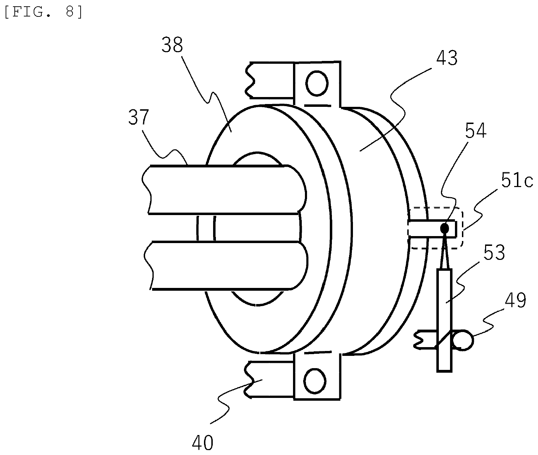

Fig. 8 is a view illustrating the external appearance of the mass filter (a portion of the mass filter) in a case where the thermocouple 53 is used as the temperature sensor. In the case of the thermocouple 53, the thermocouple 53 can be connected to the overhanging portion 51c by welding 54. Accordingly, by merely setting a width of the overhanging portion 51c necessary of welding, it is unnecessary to form a constricted portion to the overhanging portion 51c. As a matter of course, it is possible to form a constricted portion at a proximal end of the overhanging portion 51c so as to increase the adhesiveness between the holder 38 and the leaf spring 43. However, in a case where a cross-sectional area of the constricted portion becomes extremely small, a heat resistance value is increased at the constricted portion so that the decrease of temperature is generated whereby the temperature of the holder 38 cannot be accurately measured. Accordingly, attention is necessary in adopting this configuration. Further, to prevent the occurrence of a phenomenon that the leaf spring 43 is deformed due to the own weight of the thermocouple 53 so that a contact ratio between the holder 38 and the leaf spring 43 is lowered, the thermocouple 53 is fixed by the wiring fixing rod 49.

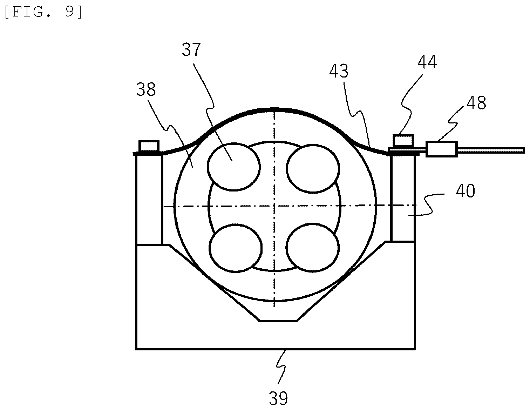

Fig. 9 is a view illustrating another example of mounting the resistance temperature detector 48 on the mass filter. In this example, the crimp terminals 52 of the resistance temperature detectors 48 are disposed between the leaf spring 43 and the holder support rods 40 and the resistance temperature detectors 48 are fixed by the screws 44. The thermocouple 53 illustrated in Fig. 8 may be fixed in the same manner. In this case, the wiring fixing rod 49 becomes unnecessary. However, in a case such a mounting method is adopted, a distance from the holder 38 to the resistance temperature detector 48 or the thermocouple 53 becomes large. Accordingly, there is a concern that a temperature drop occurs so that the measurement accuracy of the temperature of the holder 38 is lowered whereby accuracy of mass deviation correction is lowered.

In the above-mentioned configuration, the temperature sensor such as the resistance temperature detector 48 or the thermocouple 53 exemplified above is not fixed to the Q rod 37. This is because that an outer surface of the Q rod 37 is a curved surface and hence, fixing of the temperature sensor is difficult and, further, a high voltage (a direct current, an alternating current) is applied to the Q rod 37 and hence, noises easily affect the temperature sensor whereby the accurate temperature measurement becomes difficult.

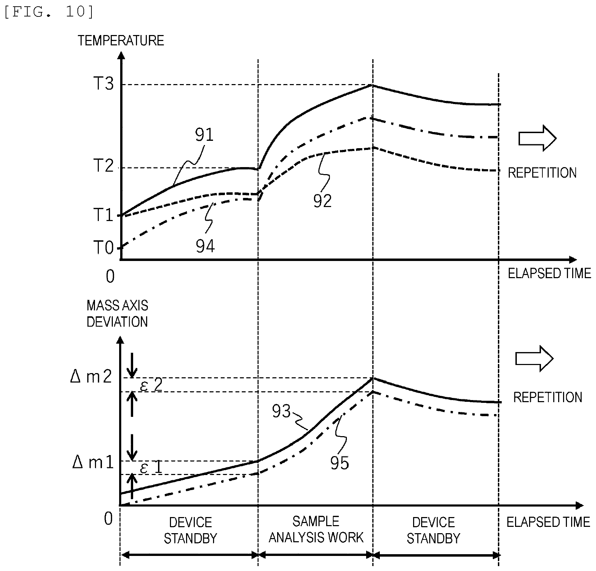

Fig. 10 is a view conceptually illustrating changes in a temperature of the holder 38 91, a temperature of the Q rod 37 92, and a mass axis deviation amount 93 with the lapse of time when a device standby and a sample analysis work are repeated after supplying electricity to the device. The method of correcting the mass axis deviation that is performed in an analysis work at the time of starting the device (device standby) is described hereinafter.

A temperature T1 is an ambient temperature (an environmental temperature) at which the mass spectrometer is installed. Before electricity is supplied to the mass spectrometer, the ambient temperature and the temperatures of the holder 38 and the Q rods 37 are substantially equal. In one example, the environmental temperature is set to 18 to 32°C (25±7°C), and the environmental temperature has a temperature change width of ±7°C with respect to a standard temperature 25°C.

First, electricity is supplied to the mass spectrometer so that the mass spectrometer is brought into a standby state. In the standby state, an ion source heater is started. In the case of the ion source heater that has a heater between ion lens elements from the ion source 2 to the tripartite mass filters 24, starting of the heater, starting of the dry pump 18, the turbo molecular pump 22, the supply of electricity to the supply source unit and the like are performed. At a stage where these processing are performed and a state is brought about where a sample analysis work by the device can be immediately started, a device standby state is completed. In the device standby state, a high frequency voltage is not applied to the Q rods 37. On the other hand, the Q rods 37 and the holder 38 are heated due to the heat transfer from various kinds of heaters that are heat generating elements and heat generating elements such as the vacuum pump. Assume that, due to the increase of temperature by heating, the holder 38 and the Q rods 37 are thermally elongated and hence, a mass axis deviation amount of Δm1 is generated at the point of time that the device standby state is completed. Assume that the mass axis deviation amount is increased by heating brought about by an analysis work of the sample, and the mass axis deviation amount of Δm2 is generated finally.

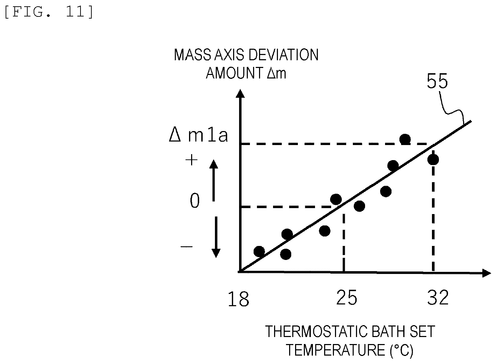

A mass spectrometer maker obtains, in advance, a correlation between an environmental temperature and a mass axis deviation amount illustrated in Fig. 11. The environmental temperature is accurately controlled using a constant temperature bath. To measure a mass axis deviation amount, it is necessary to perform an analysis work of a standard sample. First, the constant temperature bath is set to 25°C (standard temperature), an analysis of the standard sample is performed in accordance with standard analysis work steps (an analysis step manual being prepared so that the work is performed by conducting the same manipulations under the same conditions every time), and voltages U, V that are applied to the mass filter are adjusted such that a peak of a spectrum curve of a mass spectrum of a standard sample reaches a correct position. Next, the set temperature of constant temperature bath is changed between 18 to 32°C corresponding to the environmental temperature, and a deviation amount (mass axis deviation amount) from the peak of the spectrum curve in a case where the peak of the spectrum curve is a constant-temperature-bath temperature of 25°C is obtained. A regression analysis is applied to mass axis deviation amount data obtained in this manner using a least squares method thus obtaining an approximate expression 55 indicating the correlation between the environmental temperature and the mass axis deviation amount.

Assuming that Fig. 10 illustrates a graph indicating the lapse of an analysis of a standard sample performed in accordance with standard analysis work steps, a change in a temperature of the holder 38 94 and a change in mass axis deviation amount 95 when a standard temperature at the time of supplying electricity is T0 (25 °C) are conceptually illustrated in Fig. 10. In this example, to indicate a change in mass axis deviation amount brought about by heating attributed to an operation of the mass spectrometer, in Fig. 10, using the standard temperature T0 (25°C) and the mass axis deviation amount at the time of supplying electricity as reference values (=0), changes from the reference values are conceptually illustrated. The analysis of the standard sample is performed in accordance with the standard analysis work steps and hence, it is expected that the temperature of the holder 38 91 and the mass axis deviation amount 93 at the environmental temperature T1 when electricity is supplied exhibit graphs that are obtained by vertically translating the temperature of the holder 38 94 and the mass axis deviation amount 95 at the environmental temperature T0 (standard temperature) when the electricity is supplied respectively corresponding to the temperature difference of the environmental temperature when electricity is supplied.

An example of a method of adjusting the voltage values U, V applied to the Q rods 37 so as to reduce a mass axis deviation amount of Δm1 existing at the time of starting a sample analysis work using such a relationship is described hereinafter.

When the mass spectrometer is brought into a standby state in a state where the environmental temperature (T1) at the time of supplying electricity to the mass spectrometer is 32°C, the Q rods 37 and the holder 38 are heated by the heat conduction from the heating element described above and hence, the temperatures of the Q rods 37 and the temperature of the holder 38 are increased. With such increase of temperatures, the Q rods 37 and the holder 38 are thermally elongated thus generating the mass axis deviation amount of Δm1. A mass axis deviation amount to be corrected is a differential ε1 between the mass axis deviation amount 93 at the time of starting the sample analysis work and the mass axis deviation amount 95. This size is equal to a differential ε2 between the mass axis deviation amount 93 at the time of finishing the standard sample analysis work and the mass axis deviation amount 95. As illustrated in Fig. 11, the size of the differential ε2 is a mass axis deviation amount of Δm1a. Accordingly, by adjusting the values of voltages U, V applied to the mas filter such that the mass axis is deviated by -Δm1a, the mass axis deviation attributed to a change in environmental temperature can be corrected.

Generated heat in the device standby state does not differ between the analysis of a standard sample and an analysis of an unknown sample and hence, the size of the differential ε1 is not affected by the difference in sample or the like. In this manner, based on the measurement value of the temperature sensor (the resistance temperature detector 48 or the thermocouple 53) mounted on the mass filter at the time of supplying electricity to the mass spectrometer, the mass axis deviation at the point of time that the device standby is completed (the sample analysis work being started) can be corrected. Fig. 11 illustrates the example where the inclination is positive. However, depending on the configuration of the device, there may be a case where the inclination becomes negative.

Next, the method of correcting the mass axis deviation caused by a change in temperature at the time of performing the analysis work is described. At the standby time, a high frequency voltage is not applied to the mass filter and hence, the mass axis deviation is attributed to a change in an ambient temperature. However, the mass axis deviation generated at the time of performing the analysis work, ahigh frequency voltage is applied to the Q rods 37 and hence, a main cause of the mass axis deviation is the generated heat attributed to an induction loss of high frequency generated in the holder 38. As an ion scanning mode used at the time of performing the analysis work, various modes such as a product ion scanning mode, a precursor ion scanning mode, a multiple reaction monitoring (MRM) mode can be named. Voltage values applied to the first mass filter 25 and the second mass filter 27 differ depending on a scanning mode. Accordingly, a heat value of the holder 38 and, eventually, a mass axis deviation amount, also differ. To describe the above by taking the graph illustrated in Fig. 10 as an example, the graph during the sample analysis work period draws respectively different curves depending on a sample or a scanning mode by which the measurement is performed with respect to the sample. Which scanning mode is used for constituting the measurement sequence is a matter decided by a user. That is, even in the analysis of the same sample, various measurement sequences exist. Accordingly, different from the case of a standby state, it is realistically impossible for a maker to sample in advance data on a temperature change amount and a mass axis deviation amount corresponding to Fig. 11 in all measurement sequence patterns and to correct the mass axis deviation based on such data. Accordingly, the mass axis deviation is corrected by performing the feedback control of voltage values U, V applied to the mass filter such that, during the sample analysis work period, a change in temperature of the holder 38 is monitored by the temperature sensor, and estimated mass axis deviation is corrected based on the change in temperature.

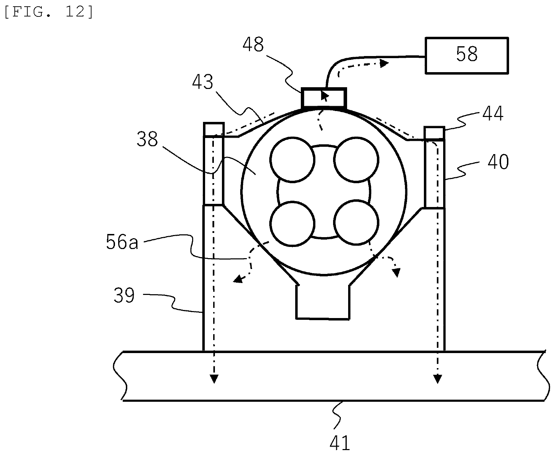

Fig. 12 Illustrates one example of the actual heat flow generated by heating the holder at the time of performing the sample analysis work. It is considered that heat is uniformly generated in the holder 38 due to an inductive loss at the time of applying a high voltage. A heat flow 56a is expressed by a chained line. The heat is transferred to the base plate 41 via the leaf spring 43, the holder support rod 40 and the holder support base 39, or to the control board 58 via the wiring. Ideally, the correction may be performed such that a temperature of the holder is changed in a state where a plurality of heaters are disposed on the surface of the holder for simulating the uniform generation of heat in the holder 38, a correlation between a temperature increase value ΔT of the temperature sensor (the resistance temperature detector 48 or the thermocouple 53) and the mass axis deviation is obtained, and a mass axis deviation amount corresponding to the temperature increase value is offset. However, it is realistically difficult to arrange the heaters that uniformly generate heat in the holder 38 on the holder.

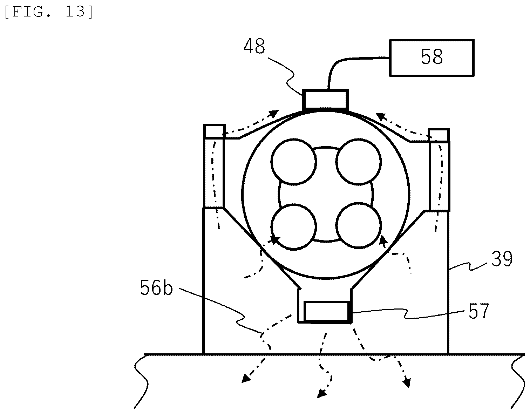

With respect to a heat source to which a temperature increase value ΔT is given, a ratio of the temperature increase value ΔT to the holder temperature T is relatively small. Accordingly, assuming that the difference in the flow of heat from the heat source is permissive, as illustrated in Fig. 13, a simulated heater 57 to which the temperature increase value ΔT is given is disposed on the holder support base 39. In Fig. 13, the heat flow 56b from the simulated heater 57 is expressed by a chained line.

To consider the above using a mechanical-electrical equivalent circuit, a heat value W of the holder generated by the simulated heater 57 corresponds to a power supply voltage, a contact heat resistance value R corresponds to an electric resistance value, and a temperature difference ΔT corresponds to a current value, and a relationship between these values is expressed by a formula of W=ΔT/R. As described previously, the positions of the heat generating elements that give the temperature difference ΔT differ from each other and hence, the heat flows 56 are not equal. In the cases illustrated in Fig. 12 and Fig. 13, even when the measurement temperatures of the resistance temperature detectors 48 are equal, the temperatures in the holder 38 are not equal in a strict meaning of the term. However, the temperatures in the holder 38 are changed by the simulated heater 57, and the mass axis deviation amount is obtained.

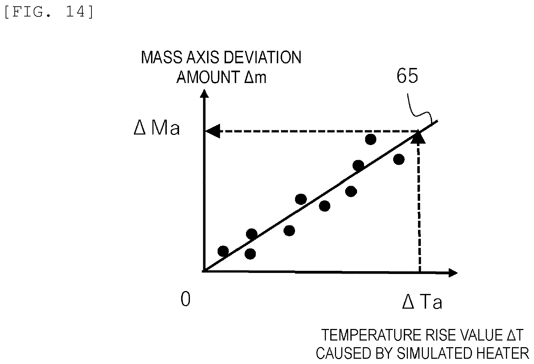

Fig. 14 illustrates an example where the mass axis deviation amount ΔT is measured by variously changing a temperature increase value ΔT using the mass filter on which the simulated heater 57 illustrated in Fig. 13 is mounted. Also in this case, the standard sample is analyzed in accordance with a manual of the standard analysis work steps. A temperature increase value ΔT generated by the simulated heater 57 with respect to a certain reference temperature is taken on an axis of abscissas, and a mass axis deviation amount of Δm is taken on an axis of ordinates . A regression analysis using a least squares method is performed with respect to the mass axis deviation amount data obtained as described above, and an approximate expression 65 that expresses a correlation between the temperature increase value ΔT and the mass axis deviation amount is obtained.

Assuming that the temperature of the holder measured by the temperature sensor is increased by ΔTa, a mass axis deviation amount ΔMa can be obtained using the approximate expression 65. By increasing or decreasing applied voltages U, V such that the mass axis deviation amount ΔMa is offset, the mass axis deviation amount can be reduced. Such correction of a high frequency voltage is performed at a certain cycle during the sample analysis period. The shorter the correction cycle, an analysis work with high accuracy that suppresses an effect of the mass axis deviation caused by applying a high frequency voltage can be performed.

In a case where, as the method of correcting a mass axis deviation amount during the sample analysis wok period, an operation is adopted where the mass spectrometer is used in accordance with a specific measurement sequence every time, data on the holder temperature and the mass axis deviation are sampled with respect to the specific measurement sequence, and the voltages U, V applied to the mass filter are controlled based on the observed holder temperature using such data thus correcting the mass axis deviation.

### [Reference Signs List]

- 1: sample solution
- 2: ion source
- 3: ion
- 4: counter plate
- 5: counter gas
- 6: ion source container
- 7: monitoring window
- 8: capillary
- 10: first pore
- 11: axis shift portion
- 12: ion guide
- 15: second pore
- 16: first differential evacuation chamber
- 18: dry pump
- 20: ion thermalizer (collision attenuator)
- 21: third pore
- 22: turbo molecular pump
- 23: second differential evacuation chamber
- 24: tripartite mass filter
- 25: first mass filter
- 26: collision chamber
- 27: second mass filter
- 28: main chamber
- 30: conversion dynode
- 31: scintillator
- 32: electron multiplier
- 33: analog-to-digital converter
- 34: monitor
- 37: rod electrode
- 38: holder
- 39: holder support base
- 40: holder support rod
- 41: base plate
- 43: leaf spring
- 44: screw
- 45: positioning pin
- 47: constricted portion
- 48: resistance temperature detector
- 49: wiring fixing rod
- 50: adhesion degraded region
- 51: overhanging portion
- 52: crimp terminal
- 53: thermocouple
- 54: welding
- 55: approximate expression
- 56: heat flow
- 57: simulated heater
- 58: control board
- 59: power supply
- 60: quadrupole filter unit
- 61: connector
- 62: space
- 70: inscribed circle
- 71, 72: mass spectrum curve
- 81: plate-shaped member
- 91, 94: temperature of holder
- 92: temperature of rod electrode
- 93, 95: mass axis deviation amount

## Claims

1. A mass spectrometer, comprising:
a mass filter including a rod electrode, a holder for holding the rod electrode, a holder support base on which the holder is placed, and a leaf spring configured to press the holder with an elastic force to fix the holder to the holder support base;
a temperature sensor; and
a control unit configured to control, based on a measurement signal of the temperature sensor, a voltage value of a high frequency voltage applied to the rod electrode, wherein
the temperature sensor is fixed to the leaf spring.

2. The mass spectrometer according to claim 1, wherein
the leaf spring includes a main body portion for fixing the holder and an overhanging portion overhanging from the main body portion in an axial direction of the rod electrode,
the main body portion is in contact with the holder in a portion where the overhanging portion is connected to the main body portion, and
the temperature sensor is attached to the overhanging portion of the leaf spring.

3. The mass spectrometer according to claim 2, wherein
the temperature sensor is a resistance temperature detector provided with a crimp terminal to be attached to a measurement object,
the crimp terminal is screwed to the overhanging portion, and
a constricted portion narrower than a width of a screwed portion of the crimp terminal is provided in the portion where the overhanging portion is connected to the main body portion.

4. The mass spectrometer according to claim 3, wherein
the mass filter includes a plate-shaped member between the holder and the holder support base,
the plate-shaped member includes an overhanging portion overhanging in the axial direction of the rod electrode, and
another temperature sensor is attached to the overhanging portion of the plate-shaped member.

5. The mass spectrometer according to claim 2, wherein
the temperature sensor is a thermocouple, and
the thermocouple is welded to the overhanging portion.

6. The mass spectrometer according to claim 1, wherein
the mass filter includes a fixing member for fixing the leaf spring by screwing,
the temperature sensor is a resistance temperature detector provided with a crimp terminal to be attached to a measurement obj ect, and
the crimp terminal is screwed to the fixing member together with the leaf spring.

7. The mass spectrometer according to claim 1, wherein
the leaf spring is made of beryllium copper or titanium nitride.

8. The mass spectrometer according to claim 1, wherein
after power on, the mass spectrometer goes through a standby state, and is then shifted to a state in which a sample analysis work is startable, when a high frequency voltage is applied to the rod electrode of the mass filter,
the control unit maintains a correlation between an environmental temperature at which the mass spectrometer is installed and a mass axis deviation amount, and
the control unit adjusts a value of a voltage to be applied to the rod electrode when the sample analysis work is started, so as to offset the mass axis deviation amount caused by a temperature difference between an environmental temperature indicated by a measurement signal of the temperature sensor at the power on and a standard temperature at which the mass axis deviation amount is set to 0.

9. The mass spectrometer according to claim 8, wherein
the correlation between the environmental temperature at which the mass spectrometer is installed and the mass axis deviation amount is obtained by performing regression analysis on data of the mass axis deviation amount, which is obtained by mass spectrometry on a standard sample according to a standard analysis work procedure, while changing the environmental temperature at which the mass spectrometer is installed.

10. The mass spectrometer according to claim 8, wherein
the control unit maintains a correlation between a temperature change indicated by the measurement signal of the temperature sensor and the mass axis deviation amount, and
the control unit adjusts the value of the voltage to be applied to the rod electrode at a predetermined cycle, so as to offset the mass axis deviation amount caused by the temperature change indicated by the measurement signal of the temperature sensor during the sample analysis work.

11. The mass spectrometer according to claim 10, wherein
the correlation between the temperature change indicated by the measurement signal of the temperature sensor and the mass axis deviation amount is obtained by performing regression analysis on data of the mass axis deviation amount, which is obtained by mass spectrometry on a standard sample according to a standard analysis work procedure, while disposing a simulated heater in the mass filter and changing an amount of heat generated by the simulated heater.

## Amended claims

### Amended claims under Art. 19.1 PCT

1. A mass spectrometer, comprising:
a mass filter including a rod electrode, a holder for holding the rod electrode, a holder support base on which the holder is placed, and a leaf spring configured to press the holder with an elastic force to fix the holder to the holder support base;
a temperature sensor; and
a control unit configured to control, based on a measurement signal of the temperature sensor, a voltage value of a high frequency voltage applied to the rod electrode, wherein
the temperature sensor is fixed to the leaf spring,
the leaf spring includes a main body portion for fixing the holder and an overhanging portion overhanging from the main body portion in an axial direction of the rod electrode,
the main body portion is in contact with the holder in a portion where the overhanging portion is connected to the main body portion, and
the temperature sensor is attached to the overhanging portion of the leaf spring.

3. The mass spectrometer according to claim 1, wherein
the temperature sensor is a resistance temperature detector provided with a crimp terminal to be attached to a measurement object,
the crimp terminal is screwed to the overhanging portion, and
a constricted portion narrower than a width of a screwed portion of the crimp terminal is provided in the portion where the overhanging portion is connected to the main body portion.

4. The mass spectrometer according to claim 3, wherein
the mass filter includes a plate-shaped member between the holder and the holder support base,
the plate-shaped member includes an overhanging portion overhanging in the axial direction of the rod electrode, and
another temperature sensor is attached to the overhanging portion of the plate-shaped member.

5. The mass spectrometer according to claim 1, wherein
the temperature sensor is a thermocouple, and
the thermocouple is welded to the overhanging portion.

7. The mass spectrometer according to claim 1, wherein
the leaf spring is made of beryllium copper or titanium nitride.

8. A mass spectrometer including: a mass filter including a rod electrode, a holder for holding the rod electrode, a holder support base on which the holder is placed, and a leaf spring configured to press the holder with an elastic force to fix the holder to the holder support base; a temperature sensor; and a control unit configured to control, based on a measurement signal of the temperature sensor, a voltage value of a high frequency voltage applied to the rod electrode, wherein
the temperature sensor is fixed to the leaf spring,
after power on, the mass spectrometer goes through a standby state, and is then shifted to a state in which a sample analysis work is startable, when a high frequency voltage is applied to the rod electrode of the mass filter.
the control unit maintains a correlation between an environmental temperature at which the mass spectrometer is installed and a mass axis deviation amount, and
the control unit adjusts a value of a voltage to be applied to the rod electrode when the sample analysis work is started, so as to offset the mass axis deviation amount caused by a temperature difference between an environmental temperature indicated by a measurement signal of the temperature sensor at the power on and a standard temperature at which the mass axis deviation amount is set to 0.

9. The mass spectrometer according to claim 8, wherein
the correlation between the environmental temperature at which the mass spectrometer is installed and the mass axis deviation amount is obtained by performing regression analysis on data of the mass axis deviation amount, which is obtained by mass spectrometry on a standard sample according to a standard analysis work procedure, while changing the environmental temperature at which the mass spectrometer is installed.

10. The mass spectrometer according to claim 8, wherein
the control unit maintains a correlation between a temperature change indicated by the measurement signal of the temperature sensor and the mass axis deviation amount, and
the control unit adjusts the value of the voltage to be applied to the rod electrode at a predetermined cycle, so as to offset the mass axis deviation amount caused by the temperature change indicated by the measurement signal of the temperature sensor during the sample analysis work.

11. The mass spectrometer according to claim 10, wherein
the correlation between the temperature change indicated by the measurement signal of the temperature sensor and the mass axis deviation amount is obtained by performing regression analysis on data of the mass axis deviation amount, which is obtained by mass spectrometry on a standard sample according to a standard analysis work procedure, while disposing a simulated heater in the mass filter and changing an amount of heat generated by the simulated heater.

## Amended claims

### Amended claims in accordance with Rule 137(2) EPC.

1. The applicant, who received the International Search Report relating to the above identified International Application transmitted on 13.09.2022, hereby files amendment under Article 19(1) as in the attached sheets.

2. We hereby would like to amend the claims 1, 3, 5 and 8, and also cancel the claims 2 and 6. Amendment to the claim 1 is based on canceled claim 2. Amendments to claims 3 and 5 are due to cancelling claim 2. Amendment to the claims 8 is to change its form from a dependent claim to an independent claim.

3. The Applicant also files as attached herewith a brief statement explaining the amendment and indicating any impact the amendment might have on the description or the drawings.
